# EUROPEAN PATENT SPECIFICATION

(11) **EP 3 575 373 B1**
(45) Date of publication and mention of the grant of the patent: **19.02.2025**
(21) Application number: 18745214.9
(22) Date of filing: 22.01.2018
(51) Int. Cl.: C09D 183/04, C09D 7/40, E01D 22/00, E04G 23/02, E21D 11/00, C04B 41/49

(54) **COATING AGENT FOR CONCRETE STRUCTURE**
BESCHICHTUNGSMITTEL FÜR BETONSTRUKTUR
AGENT DE REVÊTEMENT DESTINÉ À UNE STRUCTURE EN BÉTON

(30) Priority: 30.01.2017 JP 2017014690
(43) Date of publication of application: 04.12.2019
(73) Proprietor: Dow Toray Co., Ltd., Shinagawa-ku Tokyo 1408617 (JP)
(72) Inventor: MORI, Hideyuki, Ichihara-shi Chiba 299-0108 (JP)
(74) Representative: Murgitroyd & Company
(86) International application number: PCT/JP2018/001722
(87) International publication number: WO 2018/139395

(56) References cited:
- EP-A1- 0 050 453
- CA-A1- 2 056 487
- JP-A- 2002 241 695
- JP-A- 2005 213 487
- JP-A- 2007 056 052
- JP-A- 2007 106 946
- JP-A- 2009 019 354
- JP-A- 2009 035 704
- JP-A- H0 339 358
- JP-A- H01 306 470
- JP-A- H04 335 066
- US-A- 5 036 125
- US-A1- 2002 077 412
- "Silicones", 15 April 2003, ENCYCLOPEDIA OF POLYMER SCIENCE AND TECHNOLOGY, WILEY, US, PAGE(S) 765 - 841, XP007918236
- DATABASE WPI Week 200914, Derwent World Patents Index; AN 2009-E56027, XP002800886

## Description

### [TECHNICAL FIELD]

The present invention relates to a method for coating a concrete structure.

### [BACKGROUND ART]

There is concern that portions of a concrete structure such as a tunnel inner wall or bridge girder may detach and fall as a result of surface cracking due to neutralization and internal cracking due to earthquakes, vibration, ground subsidence, overload, and the like, and may drop onto to a vehicle or navigating ship passing under the structure. Therefore, methods for coating a transparent or semi-transparent resin onto the surface of a concrete structure have been proposed (see Patent Documents 1 to 3).

As a coating agent used in such methods, an organic resin such as an epoxy resin, acrylic resin, urethane resin, or polyester resin is used.

However, the weather resistance of such an organic resin is poor, and therefore such an organic resin is insufficient as a coating agent for tunnels, bridge girders, and other such concrete structures that are exposed to harsh environments. On the other hand, a silicone rubber composition that is cured by moisture does not need to be heated or the like when curing, and a silicone cured product having excellent weather resistance can be formed, and therefore such compositions have been examined as coating agents for concrete structures (see Patent Document 4). However, an issue with silicone rubber compositions is that adhesion to a concrete structure is insufficient.

### [PRIOR ART DOCUMENTS]

### [PATENT DOCUMENTS]

Patent Document 1: JP 2001-355343 A
Patent Document 2: JP 2006-342538 A
Patent Document 3: JP 2009-150085 A
Patent Document 4: US 2002/077412 A1

### [SUMMARY OF THE INVENTION]

### [Problems to be Solved by the Invention]

An object of the present invention is to provide a method for coating a concrete structure, the coating agent forming a silicone film that is strongly adherent to a concrete structure, and that enables visual confirmation of the surface state of the concrete structure through the silicone film.

### [Means for Solving the Problems]

The solution lies in the claimed method for coating a concrete structure, wherein the method comprises applying a primer onto a surface of a concrete structure, and subsequently applying a coating agent for concrete structures wherein the coating agent for concrete structures comprises:
(A) 100 parts by mass of a diorganopolysiloxane capped at both molecular terminals with silanol groups or silicon atom-bonded hydrolyzable groups;
(B) 1 to 25 parts by mass of a silane compound having at least two silicon atom-bonded hydrolyzable groups per molecule, or a partially hydrolyzed condensate thereof;
(C) 0.5 to 10 parts by mass of a curing catalyst; and
(D) 25 to 40 parts by mass of fumed silica.

The silicon atom-bonded hydrolyzable group in component (A) is preferably an alkoxy group.

Component (B) is preferably an alkoxysilane represented by the general formula:

R¹ₐSi(OR²)₍₄₋ₐ₎

(wherein, R¹ is a monovalent hydrocarbon group having from 1 to 6 carbon atoms; R² is an alkyl group having from 1 to 3 carbon atoms; and "a" is 0 or 1) or a partially hydrolyzed condensate thereof.

Component (C) is preferably an organic titanium compound.

Component (D) is fumed silica obtained by surface treating fumed silica having a BET specific surface area of from 200 to 400 m²/g with an organosilicon compound.

The composition may further comprise (E) a desired amount of an organic solvent.

### [EFFECTS OF THE INVENTION]

According to the coating agent for concrete structures applied in accordance with the method of the present invention, a silicone film that is strongly adherent to a concrete structure is formed, and the surface state of the concrete structure can be visually confirmed through the silicone film.

### [BRIEF DESCRIPTION OF THE DRAWINGS]

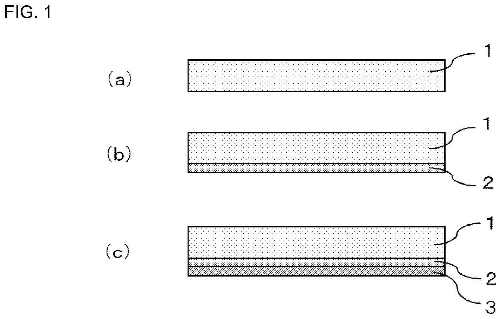

FIG. 1 is a step diagram illustrating an embodiment of a method for coating a concrete structure with the coating agent for concrete structures of the present invention.

### [MODE FOR CARRYING OUT THE INVENTION]

The coating agent for concrete structures to be applied by the method of the present invention will be described in detail.

Component (A) is a diorganopolysiloxane having silicon atom-bonded hydroxyl groups (so-called silanol groups) or silicon atom-bonded hydrolyzable groups at both molecular terminals. Examples of the silicon atom-bonded hydrolyzable groups include alkoxy groups such as a methoxy group, ethoxy group, and propoxy group; oxime groups such as an acetoxime group and a methylethylketoxime group; amino groups such as a dimethylamino group and a diethylamino group; amide groups such as an N-methylacetamide group; aminoxy groups such as a diethylaminoxy group; and alkenyloxy groups such as an isopropenyloxy group; and of these, alkoxy groups are preferable. Such alkoxy groups may be bonded directly to a silicon atom at each of the molecular terminals, and may be bonded to a silicon atom that is bonded to a silicon atom at the molecular terminal via an alkylene group. Examples of the alkylene group include a methylmethylene group, ethylene group, methylethylene group, and a propylene group. Examples of other groups bonded to the silicon atom in component (A) include alkyl groups such as a methyl group, ethyl group, propyl group, and butyl group; alkenyl groups such as a vinyl group and an allyl group; aryl groups such as a phenyl group, tolyl group, and naphthyl group; aralkyl groups such as a benzyl group, phenylethyl group, and phenyl propyl group; and halogenated hydrocarbon groups such as a chloromethyl group, trifluoropropyl group, and chloropropyl group; and of these, a methyl group is particularly preferable.

Component (B) is a silane compound having at least two silicon atom-bonded hydrolyzable groups per molecule, or is a partially hydrolyzed condensate thereof. Examples of the silicon atom-bonded hydrolyzable groups include alkoxy groups such as a methoxy group, ethoxy group, and propoxy group; oxime groups such as an acetoxime group and a methylethylketoxime group; amino groups such as a dimethylamino group and a diethylamino group; amide groups such as an N-methylacetamide group; aminoxy groups such as a diethylaminoxy group; and alkenyloxy groups such as an isopropenyloxy group; and of these, alkoxy groups are preferable. Examples of other groups bonded to the silicon atom in component (B) include alkyl groups such as a methyl group, ethyl group, propyl group, and butyl group; alkenyl groups such as a vinyl group and an allyl group; aryl groups such as a phenyl group, tolyl group, and naphthyl group; aralkyl groups such as a benzyl group, phenylethyl group, and phenylpropyl group; and halogenated hydrocarbon groups such as a chloromethyl group, trifluoropropyl group, and chloropropyl group; and of these, a methyl group is particularly preferable.

Component (B) is preferably an alkoxysilane represented by the general formula:

R¹ₐSi(OR²)₍₄₋ₐ₎

or is a partial hydrolysate thereof. In the formula, R¹ is a monovalent hydrocarbon group having from 1 to 6 carbon atoms, and examples include: an alkyl group such as a methyl group, ethyl group, propyl group, or butyl group; an alkenyl group such as a vinyl group or allyl group; and a phenyl group. Furthermore, in the formula, R² is an alkoxy group having from 1 to 3 carbon atoms, and examples include a methoxy group, an ethoxy group, and a propoxy group. In the formula, "a" is 0 or 1.

Examples of the alkoxysilane for component (B) include methyl trimethoxysilane, methyl triethoxysilane, ethyl trimethoxysilane, vinyl trimethoxysilane, phenyl trimethoxysilane, methyl trimethoxyethoxy silane, tetramethoxysilane, and tetraethoxysilane; examples of oxime silanes for component (B) include methyl tris(methylethylketoxime) silane and vinyl tris(methylethylketoxime) silane; examples of the aminosilane for component (B) include methyl tris(dimethylamino) silane; examples of the amide silane for component (B) include methyl tris(N-methylacetamide) silane; and examples of the aminoxysilane for component (B) include methyl tris(dimethylaminoxy) silane. Component (B) may use these compounds independently or as a mixture of two or more types thereof.

The content of component (B) is within a range of from 1 to 25 parts by mass, and preferably within a range of from 2 to 10 parts by mass, per 100 parts by mass of component (A). This is because when the content of component (B) is not less than the lower limit of the aforementioned range, the storage stability of the coating agent improves, and on the other hand, when the content is not more than the upper limit of the aforementioned range, the curability of the coating agent improves.

Component (C) is a curing catalyst, and examples include organic titanium compounds and organic tin compounds. Examples of the organic titanium compounds include tetra(i-propoxy) titanium, tetra(n-butoxy) titanium, tetra(t-butoxy) titanium, and other titanates; di(i-isopropoxy) bis(ethyl acetoacetate) titanium, di(i-propoxy) bis(methylacetoacetate) titanium, di(i-propoxy) bis (acetylacetone) titanium, and other titanium chelates. Examples of the organic tin compounds include dibutyltin dilaurate, dibutyltin diacetate, and dibutyltin dioctoate.

The content of component (C) is within a range of from 0.5 to 10 parts by mass, and preferably within a range of from 1 to 5 parts by mass, per 100 parts by mass of component (A). This is because when the content of component (C) is not less than the lower limit of the aforementioned range, curability of the coating agent is promoted, and on the other hand, when the content is not more than the upper limit of the aforementioned range, the storage stability of the coating agent improves.

Component (D) is fumed silica for improving the adhesion of the present coating agent and improving the mechanical properties of the obtained silicone film. This type of component (D) is fumed silica obtained by surface treating with an organosilicon compound fumed silica having a BET specific surface area within a range of from 200 to 400 m²/g. Examples of the organosilicon compound include hexamethyldisilane, hexamethylcyclotrisilazane, and other such silazane compounds; trimethylchlorosilane, dimethyldichlorosilane and other such halosilane compounds; methyltrimethoxysilane, dimethyldimethoxysilane, and other such alkoxysilane compounds; and methylhydrogenpolysiloxane and other such organopolysiloxanes.

The content of component (D) is within a range of from 25 to 40 parts by mass, and preferably within a range of from 30 to 40 parts by mass, per 100 parts by weight of component (A). This is because when the content of component (D) is not less than the lower limit of the aforementioned range, the adhesiveness of the coating agent improves, and on the other hand, when the content is not more than the upper limit of the aforementioned range, the ease of applying the coating agent improves.

The present coating agent may comprise, for example, an organic solvent, an anti-mold agent, a flame retardant, a heat resistance agent, a plasticizer, a thixotropy-imparting agent, an adhesion imparting agent, a curing accelerator, and a pigment within a range that does not hinder the object of the present invention. Examples of the organic solvent include normal hexane, toluene, xylene, and cellosolve acetate, the compounded amount thereof is optional, and a desired amount can be compounded with consideration of the ease of applying the present coating agent and the film thickness of the resulting silicone film.

Examples of the concrete structure to which the coating agent is applied include a road or rail tunnel, a road or rail bridge, and the like. FIG. 1a is a cross-sectional view illustrating a concrete structure prior to application of the present coating agent. The surface of a concrete structure 1 is preferably coated in advance with a primer in a layered manner. This primer improves the undercoat reinforcement and adhesion when the present coating agent is applied. FIG. 1b is a cross-sectional view of a concrete structure 1 having a primer layer 2 formed on a surface thereof.

Next, as illustrated in FIG. 1c, the coating agent is applied onto the surface of the primer layer 2. After application, the coating agent can be cured by leaving at room temperature. When the present coating agent is used, there is no need to further apply a top coating agent to the surface of the silicone cured product layer 3, and thus the construction period can be significantly shortened. In addition, since the silicone cured product layer 3 is transparent or semi-transparent, it is possible to visually confirm the surface of the concrete structure 1 after application even when cracks are present therein, and therefore inspection work can be more efficiently performed. In addition, even if cracking of the concrete structure 1 has occurred, the silicone cured product layer 3 has sufficient adhesiveness, elasticity, and strength, and therefore, can track the cracking and support the surface of the concrete structure 1, and can prevent the concrete from flaking off over a long period of time.

Note that a reticulated flaking prevention material can be disposed on the surface of the primer layer 2 in a layered manner to improve the concrete flaking off prevention performance. The flaking prevention material is not limited, and sheets (planar shaped bodies) of various shapes such as woven sheet-like sheets (such as fiber sheets), nonwoven sheets, and net-like or mesh-like sheets (sometimes referred to as "net-like sheets") can be used. Furthermore, various fibers such as carbon fibers, plastic fibers (e.g. aramid fibers, vinylon fibers, polyethylene fiber sheets (in particular, fiber sheets made of high impact type polyethylene), and polyimide fiber sheets, etc.), and glass fibers can be used as the material for flaking prevention.

### [Examples]

The coating agent for a concrete structure to be applied by the method of the present invention will be described in detail using Examples. Note that the viscosity is a value at 25°C. Furthermore, the adhesive strength of the cured product of the coating agent with respect to the concrete structure, and the visibility of the cured product were evaluated as follows.

### [Adhesion]

The adhesion of the cured product of the coating agent to the concrete structure was evaluated through the following "Method for Testing the Adhesion Strength of a Surface Coating Material."

### [Method for Testing the Adhesion Strength of a Surface Coating Material]

The adhesion strength was measured in accordance with the provisions of JSCE-K 531-2013 "Method for Testing Adhesion Strength of a Surface Coating Material" of the Standard Specifications for Concrete Structure published by the Japan Society of Civil Engineers. Specifically, the measurements were performed as follows. A concrete test piece having an inner dimension of 70 mm × 70 mm × 20 mm was used in accordance with the method stipulated by JIS R5201 10.4. A primer (a sealant primer B available from Dow Corning Toray Co., Ltd.) was applied at 100 g/m² and dried on the concrete test piece. Subsequently, the coating agent was applied and cured for 14 days in a 23±2°C, 50±5% RH environment in accordance with the curing conditions stipulated by JIS A 1439, and then cured for 14 days in an oven at 30±2°C. To the surface of the obtained test piece, an upper tensioning steel jig as stipulated by JSCE-K 531-2013 was adhered to the surface of the cured product of the coating agent using an adhesive (Cemedine PPX), and then left to sit for 24 hours in a 23±2°C, 50±5% RH atmosphere. Next, a square notch of 40 mm × 40 mm was inserted as far as a substrate around the upper tensioning steel jig adhered to the test piece. The maximum tensile load (N/mm²) was determined by using a steel jig for a lower tensile test and a steel contact plate described in JSCE-K 531-2013, and applying a tensile force using an autograph (available from Shimadzu Corporation) in the vertical direction. Note that the loading rate until breakage was 1750 N/minutes.

### [Visibility]

The ability to confirm the surface state of the concrete test piece through the cured product of the coating agent was evaluated, and cases in which confirmation was possible were indicated by "∘", cases in which confirmation was difficult were indicated by "Δ", and cases in which confirmation was not possible were indicated by "×".

### [Example 1]

A silicone rubber base compound was prepared by mixing 100 parts by mass of a dimethylpolysiloxane capped at both molecular terminals with hydroxy groups and having a viscosity of 15,000 mPa·s, and 35 parts by mass of fumed silica obtained by surface treating fumed silica having a BET specific surface area of 220 m²/g with hexamethyldisilazane. Next, under moisture blocking, a coating agent (I) for concrete structures was prepared by mixing 10 parts by mass of methyltrimethoxysilane and 0.7 parts by mass of tetra(t-butoxy)titanium with this silicone rubber base compound. The coating agent was then applied to a concrete test piece at a thickness of 1.0 mm to produce a test piece. The evaluation results are shown in Table 1.

### [Example 2]

A solvent type coating agent (II) for concrete structures was prepared by blending 100 parts by mass of the coating agent (I) for concrete structures prepared in Example 1 with 100 parts by mass of normal hexane. The coating agent was then applied to a concrete test piece at a thickness of 0.5 mm to produce a test piece. The evaluation results are shown in Table 1.

### [Comparative Example 1]

A coating agent (III) for concrete structures was prepared in the same manner as in Example 1 with the exception that the compounded amount of fumed silica was changed to 10 parts by mass. The coating agent was then applied to a concrete test piece at a thickness of 1.0 mm to produce a test piece. The evaluation results are shown in Table 1.

### [Comparative Example 2]

When the compounded amount of the fumed silica of Example 1 was changed to 45 parts by mass, a uniform base compound could not be prepared, and thus a uniform coating agent could not be prepared.

### [Comparative Example 3]

A base compound was prepared by mixing 100 parts by mass of a dimethylpolysiloxane capped at both molecular terminals with hydroxy groups and having a viscosity of 15,000 mPa·s, and 17 parts by mass of precipitated calcium carbonate (Solvay SA product name: Socal 312 N) that had been treated with stearic acid. Next, under moisture blocking, a coating agent (IV) for concrete structures was prepared by mixing 10 parts by mass of methyltrimethoxysilane and 0.7 parts by mass of tetra(t-butoxy)titanium with this base compound. The coating agent was then applied to a concrete test piece at a thickness of 1.0 mm to produce a test piece. The evaluation results are shown in Table 1.

**[Table 1]**

| | Present Invention | | Comparative Example | |
|---|---|---|---|---|
| | Example 1 | Example 2 | Comparative Example 1 | Comparative Example 3 |
| Adhesion (N/mm²) | 2.20 | 1.78 | 0.45 | 0.56 |
| Visibility | ○ | ○ | ○ | × |

### [Industrial Applicability]

Because the coating agent for concrete structures to be applied by the method of the present invention is cured by moisture to form a silicone film having high weather resistance, the coating agent is suitable as a coating agent for tunnels, bridge girders, and other such concrete structures that are exposed to harsh environments.

### [Reference Numerals]

- 1:: Concrete structure
- 2:: Primer layer
- 3:: Silicone cured product layer

## Claims

1. A method for coating a concrete structure, the method comprising applying a primer onto a surface of a concrete structure, and subsequently applying a coating agent for concrete structures, the coating agent comprising:
(A) 100 parts by mass of a diorganopolysiloxane capped at both molecular terminals with silanol groups or silicon atom-bonded hydrolyzable groups;
(B) 1 to 25 parts by mass of a silane compound having at least two silicon atom-bonded hydrolyzable groups per molecule, or a partially hydrolyzed condensate thereof;
(C) 0.5 to 10 parts by mass of a curing catalyst; and
(D) 25 to 40 parts by mass of fumed silica obtained by surface treating fumed silica having a BET specific surface area of from 200 to 400 m²/g with an organosilicon compound.

2. The method according to claim 1, wherein the silicon atom-bonded hydrolyzable group in component (A) is an alkoxy group.

3. The method according to claim 1, wherein component (B) is an alkoxysilane represented by the general formula:
R¹ₐSi(OR²)₍₄₋ₐ₎
(wherein, R¹ is a monovalent hydrocarbon group having from 1 to 6 carbon atoms; R² is an alkyl group having from 1 to 3 carbon atoms; and "a" is 0 or 1)
or a partially hydrolyzed condensate thereof.

4. The method according to claim 1, wherein component (C) is an organic titanium compound.

## Patentansprüche

1. Verfahren zum Beschichten einer Betonstruktur, das Verfahren umfassend ein Auftragen einer Grundierung auf eine Oberfläche einer Betonstruktur und das anschließende Auftragen eines Beschichtungsmittels für Betonstrukturen, das Beschichtungsmittel umfassend:
(A) zu 100 Massenteile ein Diorganopolysiloxan, das an beiden Molekülenden mit Silanolgruppen oder an Siliziumatome gebundenen hydrolysierbaren Gruppen versehen ist;
(B) zu 1 bis 25 Massenteile eine Silanverbindung, die mindestens zwei an Siliziumatome gebundene hydrolysierbare Gruppen pro Molekül oder ein teilweise hydrolysiertes Kondensat davon aufweist;
(C) zu 0,5 bis 10 Massenteile einen Härtungskatalysator; und
(D) zu 25 bis 40 Massenteile pyrogene Kieselsäure, erhalten durch ein Oberflächenbehandeln von pyrogener Kieselsäure, die einen BET-spezifischen Oberflächenbereich von 200 bis 400 m²/g aufweist, mit einer Organosiliziumverbindung.

2. Verfahren nach Anspruch 1, wobei die an ein Siliziumatom gebundene hydrolysierbare Gruppe in Komponente (A) eine Alkoxygruppe ist.

3. Verfahren nach Anspruch 1, wobei Komponente (B) ein Alkoxysilan ist, das durch die allgemeine Formel dargestellt ist:
R¹ₐSi(OR²)₍₄₋ₐ₎
(wobei R¹ eine einwertige Kohlenwasserstoffgruppe ist, die von 1 bis 6 Kohlenstoffatome aufweist; R² eine Alkylgruppe ist, die von 1 bis 3 Kohlenstoffatome aufweist; und "a" 0 oder 1 ist)
oder ein teilweise hydrolysiertes Kondensat davon.

4. Verfahren nach Anspruch 1, wobei Komponente (C) eine organische Titanverbindung ist.

## Revendications

1. Procédé de revêtement d'une structure en béton, le procédé comprenant l'application d'un apprêt sur la surface d'une structure en béton, puis l'application d'un agent de revêtement pour des structures en béton, l'agent de revêtement comprenant :
(A) 100 parties en masse d'un diorganopolysiloxane coiffé aux deux extrémités moléculaires par des groupes silanols ou des groupes hydrolysables liés à des atomes de silicium ;
(B) 1 à 25 parties en masse d'un composé de silane ayant au moins deux groupes hydrolysables liés à des atomes de silicium par molécule, ou un condensat partiellement hydrolysé de celui-ci ;
(C) 0,5 à 10 parties en masse d'un catalyseur de prise ; et
(D) 25 à 40 parties en masse de silice sublimée obtenue par traitement de surface de la silice sublimée ayant une surface spécifique BET de 200 à 400 m²/g avec un composé organosilicié.

2. Procédé selon la revendication 1, dans lequel le groupe hydrolysable lié à un atome de silicium dans un composant (A) est un groupe alcoxy.

3. Procédé selon la revendication 1, dans lequel un composant (B) est un alcoxysilane représenté par la formule générale :
R¹ₐSi(OR²)₍₄₋ₐ₎
(dans laquelle R¹ est un groupe hydrocarbure monovalent ayant entre 1 et 6 atomes de carbone ; R² est un groupe alkyle ayant de 1 à 3 atomes de carbone ; et « a » vaut 0 ou 1 ;
ou un condensat partiellement hydrolysé de celui-ci.

4. Procédé selon la revendication 1, dans lequel un composant (C) est un composé organique de titane.
